# EUROPEAN PATENT APPLICATION

(11) **EP 3 232 373 A1**
(43) Date of publication of application: **18.10.2017**
(21) Application number: 17460007.2
(22) Date of filing: 28.02.2017
(51) Int. Cl.: G06K 9/00, G06K 9/22, G07C 9/00

(54) **METHOD AND SYSTEM FOR VERIFICATION OF USER IDENTITY IN INFORMATION TECHNOLOGY SYSTEMS, IN PARTICULAR IN BANKING SYSTEMS**

(30) Priority: 01.03.2016 PL 41634916
(71) Applicant: Politechnika Gdanska, 80-233 Gdansk (PL)
(72) Inventor: Czyzewski, Andrzej, 81-583 Gdynia (PL); Kostek, Bozena, 81-577 Gdynia (PL); Bogdanis, Georgis, 80-178 Gdansk (PL); Sudomir, Witold, 01-494 Warszawa (PL)

(57) **Abstract**

A method of user identity verification in information systems, in particular in banking systems, that uses a writing tool containing sensors enabling tracking of hand motions or gestures whilst placing a signature and a computer system. An algorithm, allows a reference signature made by the user to be stored and compared with the signature currently being placed by the user, is used to identify the user and allow access to the banking system. The writing tool can communicate with a computer that has access to the banking system. During verification of user identity, an interaction takes place which includes the computer sending an authorisation query to the writing tool to perform an analysis of input data obtained by the writing tool during signature placement by the user. The authorisation obtained in the writing tool is sent together with the identification data using the computer, according to addresses of access pages to the information systems.

A system for verification of user identity in information systems, in particular in banking systems, including a computer device (UK) equipped with a local communication module (MKL), a logical module (ULK) and a network communication module (MKS), with access to a banking system (SB), or an electronic device, and a writing tool (IP), characterised in that the writing tool (IP) is provided with a system of sensors (CPC) connected to an analysing system (UA), and the analysing system (UA) is connected functionally to a memory system (MM) and additional software (OPD), and wherein the analysing system (UA) is also connected functionally to the communication module of the writing tool (MKP), which is connected in a wired or wirelessly to the local communication module (MKL) of the computer device (UK).

## Description

The object of the invention is to provide a method and a system for verification of user identity in information technology systems, in particular in banking systems. The invention is also intended for remote activation of electronic devices.

Hand signature is one of the most effective authentication methods of the person providing the signature. The method of banking operation authentication using hand signatures during a visit at a bank branch, in the presence of a bank staff member, is well known.

There are known systems of banking operations performed electronically, by sending operational signals using telecommunication connections, between a personal computer or a mobile device of the bank account holder and the bank server.

There are many other, known systems providing access to information resources and to remotely activated electronic devices.

In the case of known systems, data authenticating the user and their ability to perform payment-related operations are implemented in memory of a remote server or a personal computer or a mobile device.

Patent disclosure EP 0097807 B1 describes a device for identification of signatures provided on flat surfaces, in particular on paper. The device is formed as a pen communicating with an external system ensuring authentication on the basis of information provided by an acceleration sensor and by pressure sensors installed in this device.

Patent disclosure US 6925565 describes a solution using a pen equipped with a fingerprint sensor, providing the basis for authentication of a bank customer. Communication takes place using radio waves, via a transponder and a listening device. This invention does not solve the problem of authenticity verification of the provided signature on the basis of information included in the signature itself.

Patent disclosure US 6236740 B1 provides a method of authenticity verification of user signatures on the basis of signals provided by sensors of pressure on the surface, installed in a pen-imitating device. Information about the pressure measured along two axes reflects the inclination angle of the device tip against the surface.

Patent disclosure US 4078226 A describes a solution using a pen provided with piezoelectric converters placed around the pen cartridge, used for signature authenticity verification. The pressure provides the basis for signature authenticity verification. This solution allows verification of signatures provided on a firm surface only.

Polish patent application no P.415447 provides a method of contactless signing, including provision of a signature using a writing tool imitation and analysis of signals generated during the time when the signature is placed. This method is characterised in that three-axis accelerometers are installed Inside the writing tool imitation, wherein one of the accelerometers is installed closer to one end of the writing tool imitation and the other - closer to the second end, and the device is provided with a transmitter sending signals received from the accelerometers, as well as with a cooperating received installed in the analysing system. Gestures are performed using the writing tool imitation held in a hand, simulating placement of an actual signature on a material substrate, and subsequently records of such changes are analysed in a decision-making system, using an implemented algorithm containing data provided as statistic characteristics reflecting the shape of the signature, and as dynamic characteristics containing data of time relationships related to signature placement, wherein a comparison is made with a stored, reference signature and the result of such a comparison is preferably displayed on a screen.

The same patent application discloses a system used for contactless signature placement and for verification of authentication of such signatures. This system includes a pen-imitating device containing a system of sensors and a transmitting system. The pen-imitating device is also provided with three-axis accelerometers, wherein one of the accelerometers is installed closer to one end of the pen-imitating device and the other-closer to the second end, and with a transmitter sending signals received from the accelerometers, cooperating wirelessly with an analysis system. The analysis system contains a receiver, an initial processing system, a signature acquisition system, a parametrisation system and an authentication verification systems connected to a screen.

An inconvenience of the known systems lies in the necessity to have and to remember a personal identification number or passwords used in order to ensure authorisation and identification, which comprise a significant difficulty, in particular for holders of bank accounts at various banks and for people accessing various other, secured information resources.

A method of user identity verification in information systems, in particular in banking systems, characterised in that electronic systems enabling tracking of hand motions or gestures accompanying placing a signature are installed in a writing tool imitation, and the writing tool imitation is equipped with a computer memory system, where an algorithm containing data provided as static characteristics reflecting the shape of the signature and as dynamic characteristics containing data of time relationships occurring during signature placement by the user and access data identifying the user are implemented according to the invention is characterised in that an application for communication with the writing tool imitation and with access pages of information systems is installed on a computer, preferably on a personal computer or on a mobile device. The writing tool imitation interacts with the computer during verification of user identity, wherein the interaction includes the computer sending an authorisation query performed as analysis of input data obtained by the writing tool imitation during signature placement by the user. The authorisation obtained in the writing tool imitation is sent together with identification data using the computer, according to addresses of access pages to information systems.

A system for verification of user identity in information systems, in particular in banking systems, including a computer device equipped with a local communication module, a logical module and a network communication module, with access to a banking system, or an electronic device, and a writing tool imitation according to the invention is characterised in that the writing tool imitation is provided with a system of sensors connected to an analysing system, and the analysing system is connected functionally to a memory system wherein additional software is implemented. The analysing system is also connected functionally to the communication module of the writing tool imitation, connected using a cable or wirelessly to the network communication module of the computer device.

Three-axis accelerometers and/or pressure sensors and/or a gyroscope is/are preferably installed in the sensor system of the writing tool imitation.

Use of the invention enables easy and safe access to banking systems, or simple and safe activation of electronic devices without the need to remember a personal identification number or passwords used for authorisation and identification.

The Invention Is better explained in the drawing, in which Fig. 1 presents a diagram of an embodiment of the invention used in banking systems and Fig. 2 presents a diagram of an embodiment of the invention used for activation of electronic devices, and Fig. 3 presents an example system for execution of the method according to the invention.

### Example 1

### Use of personal computer to access banking systems

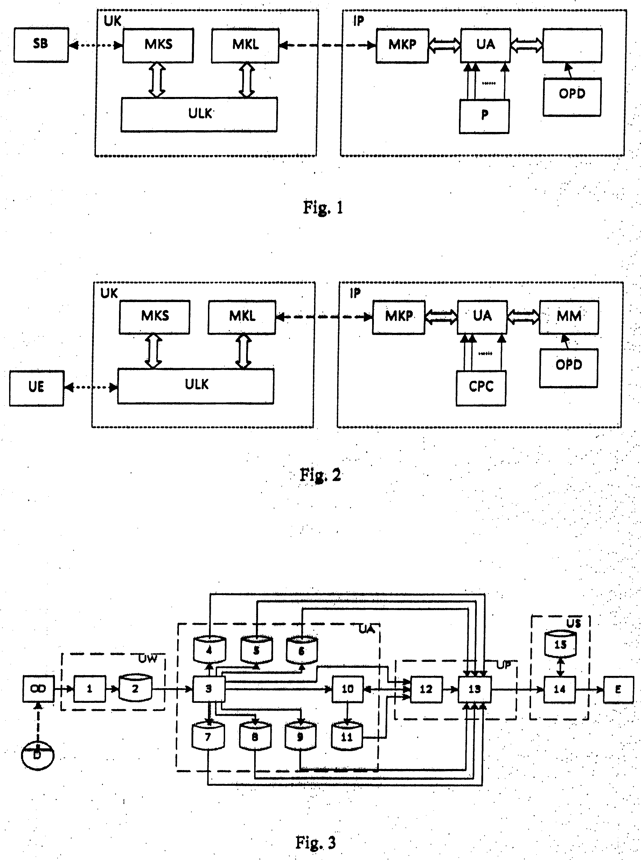

A writing tool imitation IP according to Fig. 1 is equipped with a sensor system CP provided as two three-axis accelerometers. One of the accelerometers is installed closer to one end of the writing tool imitation IP, and the other - closer to the other end. The writing tool imitation IP is also provided with an analysing system UA, in the computer memory M of which an algorithm containing data provided as static characteristics reflecting the shape of the signature and as dynamic characteristics containing data of time relationships observed during signature placement by the user is implemented. The writing tool imitation IP is also equipped with a transmitting-receiving device comprising the local communication module MKL enabling two-way wired communication with a cooperating desktop-type personal computer UK, external in regards to the writing tool imitation IP, communicating with the communication module of the writing tool imitation MKP using its own local communication module UKL. Because of the widespread use of the Bluetooth standard, commonly used as organisation method of local communication between computer- and microprocessor-based systems, it is preferable that the local communication module MKL and the writing tool imitation communication module MKP operate using the Bluetooth standard. However, these modules may alternatively use other communication standards, such as infrared communication using the IrDA standard or the wireless USB-IF standard. Operation and cooperation of communication systems of the desktop-type personal computer UK are controlled by an internal logical system of the computer ULK.

Software is installed on the computer device UK, the operation of which requires the user to send the access address of a banking system SB to the writing tool imitation IP as a request to provide a login and a password required to authenticate access to the banking system SB using the personal computer UK. For this purpose, the user initially connects to the banking system SB using the personal computer UK using the network communication module MKS installed in this computer. The communication module of the writing tool imitation MKP included in electronic circuits of the writing tool imitation IP receives requests to authorise the user of banking systems SB. Authorisation requests are sent via the communication module MKL via the personal computer UK, external in regards to the writing tool imitation IP, as well as using a transmitter included in the communication module of the writing tool imitation MKP.

Authorisation data is obtained using the writing tool imitation IP such that the user places their signature using the writing tool imitation IP on any surface, simultaneously generating accelerometer signals received from accelerometers installed in the writing tool imitation. These signals are analysed during signature placement in the analysing system UA in order to decide whether the placed signature corresponds to the reference signature of the user stored, preferably in an encrypted form, in the memory M installed in the writing tool imitation IP.

As Fig. 3 shows, the analysing system UA includes a receiver OD, an initial processing system UW, a signature acquisition system UAP, a parametrisation system UP and an authenticity verification system US connected to a display E. The signature acquisition system UAP includes a signal reception system 1 receiving signals from accelerometers installed in the received OD and sent to the first buffer 2, connected to the system receiving signals describing the placed signature 3, which is in turn connected to the buffer of accelerations along the X-axis 4 from the first accelerometer, the buffer of accelerations along the Y-axis 5 from the first accelerometer, the buffer of accelerations along the Z-axis 6 from the first accelerometer, the buffer of accelerations along the X-axis 7 from the second accelerometer, the buffer of accelerations along the Y-axis 8 from the second d accelerometer, the buffer of accelerations along the Z-axis 9 from the second accelerometer and with the clock system 10, which is in term connected to the timestamp buffer 11 and to the system detecting the end of the signature placement process 12 in the parametrisation system UP. The system detecting the end of the signature placement process 12 is also connected to the system receiving signals described the placed signature 3, the timestamp buffer 11, and the parameter determination system 13. The parameter determination system 13 is connected to the comparing system 14 in the authenticity verification system US and to the buffer of accelerations along the X-axis 4 from the first accelerometer, the buffer of accelerations along the Y-axis 5 from the first accelerometer, the buffer of accelerations along the Z-axis 6 from the first accelerometer, the buffer of accelerations along the X-axis 7 from the second accelerometer, the buffer of accelerations along the Y-axis 8 from the second accelerometer, the buffer of accelerations along the Z-axis 9 from the second accelerometer. The comparing system 14 is connected to the reference parameter memory system 15 and to the display E.

Once user identity is verified on the basis of analysis of their signature by the writing tool imitation IP performed by the analysing system UA, the login and the password required for authorisation are sent using the software installed on the personal computer UK to the banking system SB. Thus, the banking system SB is able to perform transactions on the basis of obtained access passwords.

Alternatively, a sensor detecting pressure on the surface during writing, sensors detecting pressure on the housing of the writing tool imitation or a miniature gyroscope can be used with the writing tool imitation IP.

### Example II

### Use of a mobile device for activation of electronic devices

A system shown in Fig. 2 is assembled, wherein a mobile device UK is used as the computer device, connected in a contactless manner to an electronic device UE, and the location where access passwords and additional software are stored OPD uses computer memory M of the analysing system UA integrated with the writing tool imitation IP in the same housing.

User verification is performed as described in Example 1.

If an external electronic device UE asks for access authorisation received from the writing tool imitation IP by a computer device UK, the system sends not only the signature made by the user positively verified by the analysing system UA, but additional software OPD is also retrieved from the computer memory M.

Access passwords transmitted from the analysing system UA included in the working tool imitation IP as a result of authorisation reach the electronic device UE together with the additional software OPD, thus enabling user authorisation on this device and additional software OPD to be started on this electronic device UE.

### Example III

### A simplified system for use of a mobile device for activation of electronic devices

A system simplified compared to the system presented in Fig. 1 is assembled. The simplified system does not contain the entire computer device UK block and the external electronic device UE connects directly and wirelessly to the writing tool imitation IP using the local communication module MKL. Other operations are performed as described in Example II.

## Claims

1. Method of user identity verification in information systems, in particular in banking systems, wherein electronic systems enabling tracking of hand motions or gestures accompanying placing a signature are installed in a writing tool imitation, and the writing tool imitation is equipped with a computer memory system, where an algorithm allowing a reference signature made by the user to be stored and compared with the signature currently being placed by the user, access and data identifying the user are implemented, **characterised in that** an application for communication with the writing tool imitation and with access pages of information systems is installed on a computer, preferably on a personal computer or on a mobile device, and during verification of user identity, an interaction takes place, which includes the computer sending an authorisation query performed as analysis of input data obtained by the writing tool imitation during signature placement by the user, and the authorisation obtained in the writing tool imitation is sent together with the identification data using the computer, according to addresses of access pages to information systems.

2. System for verification of user identity in information systems, in particular in banking systems, including a computer device equipped with a local communication module, a logical module and a network communication module, with access to a banking system, or an electronic device, and a writing tool imitation, **characterised in that** the writing tool imitation is provided with a system of sensors (CP) connected to an analysing system (UA), and the analysing system (UA) is connected functionally to a memory system (M), wherein additional software (OPD), and wherein the analysing system (UA) is also connected functionally to the communication module of the writing tool imitation (MKP), connected in a wired or wirelessly to the network communication module (MKL) of the computer device (UK).

3. System according to Claim 2, **characterised in that** three-axis accelerometers and/or sensors detecting pressure on the housing and/or sensors detecting pressure on the surface and/or a gyroscope are installed in the sensor system (CP) of the writing tool imitation (IP).
